# EUROPEAN PATENT SPECIFICATION

(11) **EP 3 397 474 B1**
(45) Date of publication and mention of the grant of the patent: **07.06.2023**
(21) Application number: 17771254.4
(22) Date of filing: 24.03.2017
(51) Int. Cl.: B32B 27/08, B32B 27/32, C08J 7/04, B65D 65/40

(54) **MULTILAYER FILM**
MEHRSCHICHTIGE FOLIE
FILM MULTICOUCHE

(30) Priority: 24.03.2016 US 201662312945 P
(43) Date of publication of application: 07.11.2018
(73) Proprietor: Jindal Innovation Center SRL, 6761 Virton (BE)
(72) Inventor: SUNDARARAMAN, Anand, L-2510 Strassen (LU); BENDER, Eric, W., Fairport, NY 14450 (US)
(74) Representative: Barker Brettell LLP
(86) International application number: PCT/US2017/024068
(87) International publication number: WO 2017/165798

(56) References cited:
- EP-B1- 1 196 284
- EP-B1- 1 735 150
- WO-A1-96/16799
- WO-A1-96/16799
- US-A- 5 093 164
- US-A1- 2009 136 760
- US-A1- 2013 004 764
- US-A1- 2013 323 513
- US-B2- 7 419 726

## Description

### FIELD

This disclosure generally relates to substantially clear, non-polyvinylidene chloride ("PVDC") structures having exceptional flavor and aroma barriers and little to no shelf-life deterioration. The claimed invention relates to a multilayer film.

### BACKGROUND

Traditionally, films based on PVDC have been used as packaging for confections due to their clarity and high barrier properties. However, these films are becoming increasingly less acceptable for today's end users due to pollution concerns arising from the presence of halogens (i.e., Group VII elements and compounds thereof).

Non-PVDC barrier films exist; but these films have significant drawbacks compared to the traditional PVDC packaging. They may have poor machinability, lower aroma and flavor barrier properties, or exhibit visual defects such as puckering or dimpling when used on products having long shelf lives.

There is, therefore, a need for clear non-PVDC barrier films which are environmentally friendly but which reduce the drawbacks.

US 2013/004764 discloses a modified poly(vinyl alcohol) (PVA) coated film for use in packaging, and a preparation method thereof. Said film comprises a coating layer, a primer layer and a substrate in turn. Said coating layer comprises acrylic coating layer and modified PVA coating layer in turn. Said modified PVA coating layer contacts with the primer layer.

WO 96/16799 discloses a multilayer heat sealable film that comprises: (a) a polyolefin film substrate layer; (b) a heat sealable acrylic polymeric coating; and (c) a layer of PVA between (a) and (b).

### SUMMARY

The claimed invention provides a multilayer film as defined by claim 1.

The present disclosure more generally provides methods, applications, compositions, structures, labels, packages, tags, and so forth associated with at least substantially clear, non-polyvinylidene chloride ("PVDC") structures having exceptional flavor and aroma barriers and little to no shelf-life deterioration, such as puckering or dimpling, from a visual perspective, alongside excellent machinability performance.

The claimed multilayer film includes a biaxially oriented core layer comprising polypropylene and having a first surface and a second surface. The claimed multilayer film also includes a barrier layer comprising ethylene-vinyl-alcohol, polyvinyl-alcohol, polyamide, or combinations thereof, wherein the barrier layer is adjacent to the first surface of the core layer. The barrier layer is co-extruded with the core layer.

The claimed multilayer film also includes a first acrylic polymer layer adjacent to the second surface of the core layer, and a second acrylic polymer layer adjacent to the barrier layer. The barrier layer is hence top-coated with an acrylic coating, which may enhance the machinability, sealability and/or appearance of the structure(s), whether used, for example, directly or indirectly in labels, packages, tags, or otherwise.

### DRAWINGS

FIG. 1 depicts a typical multi-layer packaging film.
FIG. 2 depicts the testing of the various embodiments described herein.
FIG. 3 depicts the results of a test for puckering conducted on various embodiments described herein.
FIG. 4 depicts the results of a test for looseness conducted on various embodiments described herein.
FIGS. 5-7 depict various visual and tactile defects present in a typical multi-layer packaging film.
FIGS. 8-9 depict two embodiments described herein which resist the visual and tactile defects illustrated in FIGS. 5-7.

### DETAILED DESCRIPTION

Below, directional terms, such as "above," "below," "upper," "lower," "front," "back," "top," "bottom," etc., are used for convenience in referring to the accompanying drawings. In general, "above," "upper," "upward," "top," and similar terms refer to a direction away the earth's surface, and "below," "lower," "downward," "bottom," and similar terms refer to a direction toward the earth's surface, but is meant for illustrative purposes only.

Various specific embodiments, versions and examples are now being described, including exemplary embodiments and definitions that are adopted herein for purposes of understanding. The embodiments, versions and examples described below are not necessarily according to the invention, which is defined by the claims.

An example coated barrier film that is described but not claimed is illustrated below as "Structure 1" having a core of biaxially oriented polypropylene ("BOPP"). The barrier layer may have a PVDC coating on one side of the film. The other side of the film may be coated with an acrylic coating for improved coefficient of friction ("COF"), machinability, and seal performances.

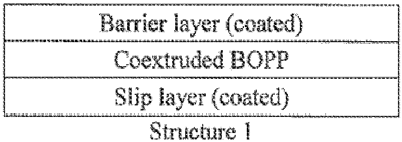

PVDC-based structures show clear, high barrier properties and are used for packaging, such as for confectionaries. PVDC-based structures, however, are not acceptable for today's end- users because of the presence of halogens. As compared to PVDC-based structures, non-PVDC barrier structures may have lower aroma barriers, flavor barriers, and combinations thereof; additionally and alternatively, non-PVDC barrier structures may have a poorer visual appearance, such as puckering or dimpling, over time and/or poorer machinability. Accordingly, there is a desire to have at least a substantially clear barrier structure that is non-PVDC, and, thus, environmentally friendly.

A coating's barrier is determined by its chemical and physical properties, wherein each may impact on the other. Physical properties may include the crystal morphology and packing of the coating, *i.e.,* the relative form and structure as well as packing, respectively, of the amorphous and crystalline regions of a polymer matrix that wholly or partially constitutes the disclosed coating. As just mentioned, the crystal structure may be influenced by the chemical nature and the interfacial interactions between a primer and a barrier topcoat where a primer is present. Localized crystal structure imperfections may arise due to a host of reasons, including, for example, incompatibility of the primer and barrier topcoat, wherein such incompatibility may be due to surface defects in the primer that are translated to the barrier coating. Consequently, localized defects may lead to inferior barrier performances of a coating.

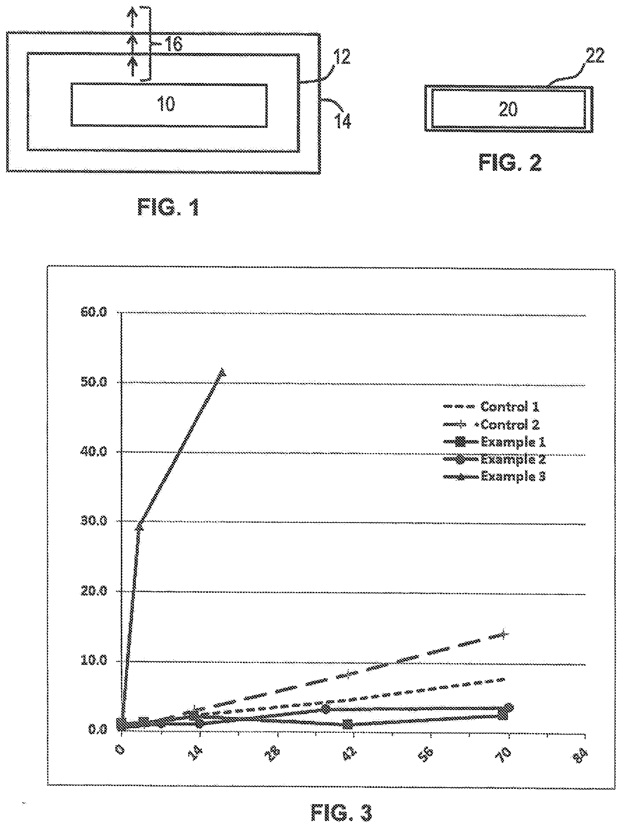

Turning to FIG. 1, the overall flavor and aroma barrier of a packaging film having layers 12, 14 and surrounding product 10 may be determined by the mass transfer phenomena of adsorption, diffusion, and desorption of the flavor and aroma molecules from the product through the film to the environment as depicted by arrows 16. Alternatively, in some cases, one may also expect the ingress of unwanted flavors from the environment through the film into the product depending on the concentration gradient of the ingress compounds. For example, if the food package is placed next to a detergent on a shopping aisle, one might think of same process of migration of detergent or soapy flavors from the outside to the inside of the package depending on the diffusion parameters of detergent aroma. While, in general, the physical and chemical properties of a barrier film are important in designing a barrier film, it is also important to understand and study the interaction of the flavor and aroma compounds of the product with the particular barrier film at issue. During the migration process of the flavor and aroma compounds the compounds may be absorbed by the packaging film to various degrees known as "flavor scalping" before being desorbed to the environment.

In some instances, as reported by Nielsen, *et al.,* the absorbed compounds may act as plasticizers and swell the polymer film resulting in changes to modulus of elasticity and tensile strength of the packaging film. Nielsen, Tim and Margaretha JMgerstad, "Flavour Scalping by Food Packaging," Trends in Food Science & Technology, Vol. 5, November 1994. In another instance, Van Willige RWG, *et al.,* has reported that polypropylene films show considerable absorption of selected flavor compounds resulting in changes to the crystal structure of the polymeric film due to the plasticizing effect of the flavor and aroma compounds. Van Willige RWG, et al., Food Addit and Contain. 19:303-313 (2002). The change in the crystal structure increases the free volume of the polymeric film and results in increased oxygen permeability of the films. Id. Low oxygen permeability through the packaging film is an important factor for the shelf life of many food products.

In this disclosure, the interaction of the aroma and flavor molecules within the film was studied by two types of visual distortion: (1) package looseness; and (2) puckering or dimpling as described in further detail below. Package looseness is mainly observed when the inner layer of the film facing the flavored product provides low barrier for the compounds across the entire surface area of the film. The flavor and the aroma molecules are adsorbed throughout the film surface and diffuse in the bulk of the packaging film. During the diffusion process, the compounds interact with the polymer film as a plasticizer, resulting in package swelling or looseness. The diffusion rate or resident time of the compounds in the film dictates the extent of looseness or deformation of the polymeric film. The diffusion rate or resident time of the compounds may be affected by the concentration gradient of the aroma compounds, the thickness of the polymer film, the crystal morphology, the free volume of the polymeric film, and the chemical nature of the film. In one instance, the diffusion and desorption of the compounds from the flavored product through the film to the environment may be relatively fast where the package swelling is minimal due to the short residence time of the compounds in the bulk of the film. In another instance, the diffusion and desorption of the compounds from the flavored product through the film to the environment may be relatively slow where the package swelling is considerably affected by the long residence time of the compounds in the bulk of the film. For instance, if the outer layer of the film provides an obstacle for desorption process, then the flavor compounds are trapped in the bulk of the polymeric film, resulting in heavy swelling. The concern of the second visual distortion, *i,e.,* puckering or dimpling, arises when the internal barrier layer facing the flavored product has localized defects on its surface that provide channel(s) for the flavor compounds to adsorb and diffuse through the film. This localized diffusion and chemical interaction between the flavor molecules and the BOPP core results in a localized structural distortion, *i.e.,* puckering or dimpling, of the BOPP film used, for example, in packaging, labeling and/or tagging applications.

The claimed invention provides a multilayer film comprising: a biaxially oriented core layer comprising polypropylene and having a first surface and a second surface; a barrier layer comprising ethylene-vinyl-alcohol, polyvinyl-alcohol, polyamide, or combinations thereof, wherein the barrier layer is adjacent to the first surface of the core layer; a first acrylic polymer layer adjacent to the second surface of the core layer, and a second acrylic polymer layer adjacent to the barrier layer; wherein the barrier layer is co-extruded with the core layer.

Below are example embodiments of structures, used through this disclosure as commensurate with compositions and films, for use in packaging, labeling, tagging, and/or other applications that have improved machinability, sealability, and appearance as a result, at least partially, on coating barriers). In one example embodiment, shown below as Structure 2, a biaxially coextruded film having a polypropylene core with barrier skin is used as a base film. The barrier skin is a non-halogenated layer which may include, but is not limited to, ethyl vinyl alcohol ("EVOH") or nylon. The claimed invention requires that the barrier layer comprises ethylene-vinyl-alcohol, polyvinyl-alcohol, polyamide, or combinations thereof. The non-halogenated barrier skin provides the necessary flavor and aroma barrier. The coextruded base film thickness may be with a range between 8 µm to 100 µm, or in the range between 12 µm to 50 µm, or yet in the range of 15 µm to 25 µm. The EVOH skin thickness may be with a range between 0.2 µm to 10 µm, or in the range between 0.4 µm to 5 µm, or yet in the range of 0.8 µm to 2 µm. The coextruded base film is flanked by acrylic coatings, each having an inline or outline coating. The dry coating weight may be with a range between 0.04 g/m² to 8 g/m², or in the range between 0.15 g/m² to 3.75 g/m², or yet in the range of 0.35 g/m² to 1.55 g/m².

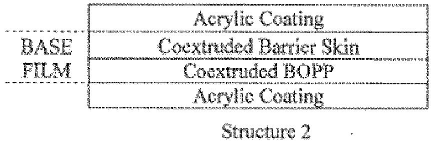

In a specific example, illustrated below as Structure 3, the base film is biaxially coextruded film having a polypropylene core with EVOH Evalca G176B in the skin layer. The base film is 18 µm in thickness including the EVOH skin layer thickness of 1 micrometer. The base film is flanked by acrylic coatings, with thickness of 0.62 g/m². Not depicted in the Structure 3 below is a primer layer of polyethylenimine applied underneath each acrylic coating to enhance the adhesion of the acrylic coating to the base film. The 1 micrometer EVOH skin provides the necessary flavor and aroma barrier. The acrylic coating provides superior machinability such as low and consistent COF and excellent hot slip properties.

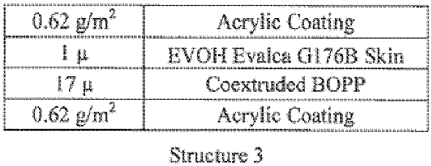

In another example embodiment that is described but not claimed, illustrated below as Structure 4, a coextruded BOPP film is coated on a first side with a non-halogenated barrier coating. The barrier coating is polymeric solution or dispersion containing at least EVOH, PVOH, polyamide or combinations thereof. The "EVOH/PVOH coating" provides the necessary flavor and aroma barrier. The coextruded BOPP base film thickness may be with a range between 8 µm to 100 µm, or in the range between 12 µm to 50 µm, or yet in the range of 15 µm to 25 µm. The "EVOH/PVOH coating" dry coating weight may be with a range between 0.04 g/m² to 8 g/m², or in the range between 0.15 g/m² to 3.75 g/m², or yet in the range of 0.35 g/m² to 1.55. The EVOH/PVOH coating(s) layer are further top-coated now with an acrylic coating. The dry acrylic coating weight may be with a range between 0.04 g/m² to 8 g/m², or in the range between 0.15 g/m² to 3.75 g/m², or yet in the range of 0.35 g/m² to 1.55. The second side of the coextruded BOPP core has an acrylic coating. The dry coating weight may be with a range between 0.04 g/m² to 8 g/m², or in the range between 0.15 g/m² to 3.75 g/m², or yet in the range of 0.35 g/m² to 1.55.

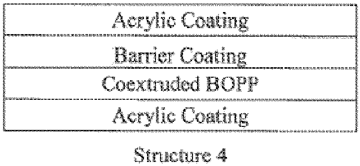

In a specific example that is described but not claimed, illustrated below as Structure 5, the coextruded BOPP film is 17 µm in thickness with the EVOH coating dry coating weight of 0.62 g/m². The EVOH coating layer is further top-coated with an acrylic coating of dry coating weight of 0.62 g/m². The second side of the coextruded BOPP core has an acrylic coating of dry coating weight of 0.62 g/m². Not depicted in Structure 5 is a primer layer of polyethylenimine applied underneath each acrylic coating to enhance the adhesion of the acrylic coating to the base film. Also not depicted in the Structure 5 is a primer layer of polyethylenimine, which may be blended with an EVOH coating in appropriate ratio so as to result in a one-step manufacturing process of primer, which includes the EVOH coating at one laydown point, and then an acrylic top-coating at another laydown point so that the multiple coatings to the base film occur in the same run. The EVOH coating in Structure 5 may provide a barrier and the polyethylenimine may provide both anchorage to a BOPP film and adhesion to the top-coated acrylic coating. The EVOH-polyethylenimine coating provides the necessary flavor and aroma barrier, which is further enhanced by the flavor and aroma barrier properties imparted by acrylics in any acrylic top-coatings. The acrylic coating may provide enhanced machinability, such as low and consistent COF, and excellent hot slip properties.

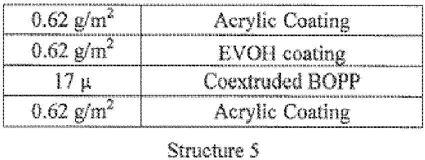

In another example embodiment that is described but not claimed, illustrated below as Structure 6, a coextruded BOPP film is coated on a both sides side with a non-halogenated barrier coating. The barrier coating is polymeric solution or dispersion containing at least EVOH, PVOH, polyamide or combinations thereof. The coextruded BOPP base film thickness may be with a range between 8 µm to 100 µm, or in the range between 12 µm to 50 µm, or yet in the range of 15 µm to 25 µm. The "EVOH/PVOH coating" dry coating weights may be with a range between 0.04 g/m² to 8 g/m², or in the range between 0.15 g/m² to 3.75 g/m², or yet in the range of 0.35 g/m² to 1.55. The EVOH/PVOH coating(s) layer(s) are further top-coated with an acrylic coating. The dry acrylic coating weight may be with a range between 0.04 g/m² to 8 g/m², or in the range between 0.15 g/m² to 3.75 g/m², or yet in the range of 0.35 g/m² to 1.55.

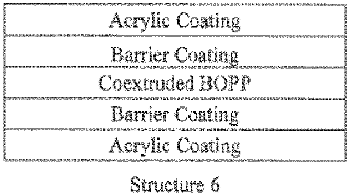

The chemical compositions of the EVOH and acrylic coatings that may be used in the structures and applications of this disclosure may vary, but example EVOH, acrylic coatings may optionally include one or more additives, for instance, to combat slip and blocking, control rheology, crosslinker to enhance the humidity resistance, defoamer to eliminate foams and surface defects. Table 1 illustrates the EVOH coating composition used to produce Structure 3.

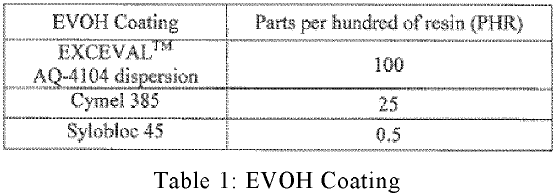

EXCEVAL^{™}AQ-4104 was obtained as flakes from Kuraray America, Inc. and a 10% dispersion was prepared. Cymel 385 was obtained from Cytec Industries Inc., and Sylobloc 45 was obtained from Grace Davison.

The chemical compositions of the acrylic coatings that may be used in the structures and applications of this disclosure may vary, but example acrylic coatings may optionally include one or more additives, for instance, to combat slip and blocking, control rheology, crosslinker to enhance the humidity resistance, defoamer to eliminate foams and surface defects. In one example Table 2 illustrates the acrylic coating composition used to produce Structure 3.

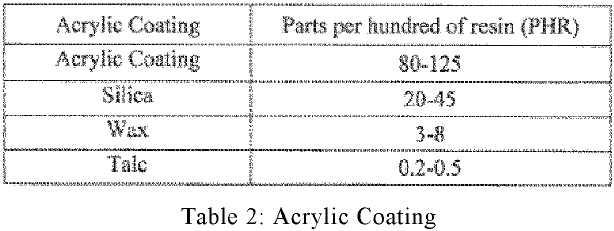

The acrylic coating may be, e.g., 13Q51AA from Valspar Corporation, HSL 701 from BASF, HSL 700 from BASF. Silica may be, e.g., Ludox TM-40 from Grace Davison, Nalco 1040 from Nalco Company. Wax may be, e.g., Michelman Carnauba wax, Roger Reed Carnauba wax, Micro Powders Inc. wax additive AQUABEAD^{®} 270E. Talc may be, e.g., Mistron Monomix from Luzenac America, Inc.

Turning now to FIG. 2, to further understand the flavor and aroma barrier behaviors of the above-described structures, package shelf-life studies were carried out. In one study, commercial sugar-free peppermint gum packs 20 were unwrapped, i.e., their overwrap was removed. Then, the gum packs were hand-wrapped with a film type of interest 22 as depicted in FIG. 2.

Next, the packages were placed in an oven at 35°C. The appearance of the packages was monitored regularly over several weeks for defects, such as puckering and package looseness. The analysis of puckering defects is reported by using a "weighted method," which is representative of a typical person's view of the package. That is, when the number is higher, then the visible puckers are more prominent, and, therefore, the worse the package appears. The number of dimples of each size is multiplied by weight factors, wherein higher weight factors are given to larger dimples as represented in Table 3. The point at which the package appearance starts to look noticeably puckered, *i*.*e*., "unacceptable," is above or greater than 10 weighted average number. The pucker appearance response provided by a sample at the end of 4 weeks at 35°C is a good indication for extrapolating if the sample will provide acceptable or unacceptable appearance.

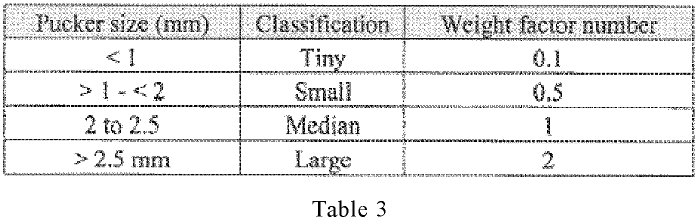

In a study of the film structures in Table 4, each control or example was wrapped around a sugar-free peppermint gum pack and monitored for its pucker-resistance performance as described in the preceding paragraphs.

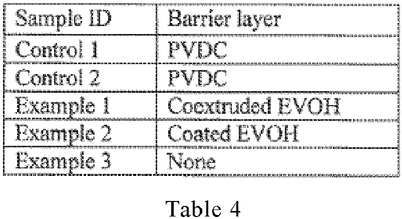

Control 1 (comparative) in Table 4 is BOPP film, and, more specifically, is Structure 1 as previously described. One side of Control 1 BOPP core has a PVDC barrier coating with an epoxy primer and the other side has an acrylic coating. Control 2 (comparative) is also Structure 1 with a BOPP core, but with one side having a PVDC barrier coating with a polyurethane primer and the other side having an acrylic coating. Example 1 (invention) is as described by Structure 3, and, more specifically, has a coextruded EVOH skin as a barrier layer and top-coated with acrylic coating and the other side has an acrylic coating. Example 2 (comparative) is as described by Structure 5, but has one side that is coated with an EVOH barrier layer that is top-coated with acrylic coating and the other side has an acrylic coating. Example 3 (comparative) is as described by Structure 4, but does not have any barrier layer and is top-coated with acrylic coating on either side.

Turning now to FIG. 3, the pucker-resistance performance of the samples was monitored over 10 weeks and their performance is illustrated as a function of weighted pucker number (where a medium dimple = 1) over time in days. Over a period of 10 weeks (70 days), control 2 with PVDC as the barrier layer and a polyurethane primer showed unacceptable pucker-resistance performance with a weighted average pucker number at 10 weeks of 14.2. Control 1 with PVDC as the barrier layer and an epoxy primer showed acceptable pucker resistance performance with a weighted average pucker number at 10 weeks of 7.8. By comparison, Example 1 and Example 2 were non-PVDC containing films with an EVOH barrier layer. Example 1 showed excellent pucker-resistance performance with a weighted average pucker number at 10 weeks of 2.6. Example 2 also showed excellent pucker-resistance performance with a weighted average pucker number at 10 weeks of 3.3. In contrast, Example 3 did not have any barrier layer and showed poor pucker-resistance performance with a weighted average pucker number at 2 weeks of 52. Hence, Example 3 was eliminated from further testing after 2 weeks. These results illustrate that the presence of the barrier layer and the type of the barrier layer are important in determining a film's pucker-resistance performance, which is indicative of the aroma and flavor barrier performance of the film.

During the pucker-resistance tests, it was observed that looseness of the overwrap film was affected considerably as a function of time based on presence of the barrier layer and the type of the barrier layer. The looseness of the overwrap film is also indicative of the shelf-life of the package. Table 5 is a visual ranking used to rank the looseness of the package.

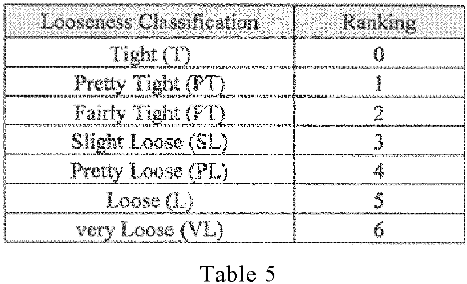

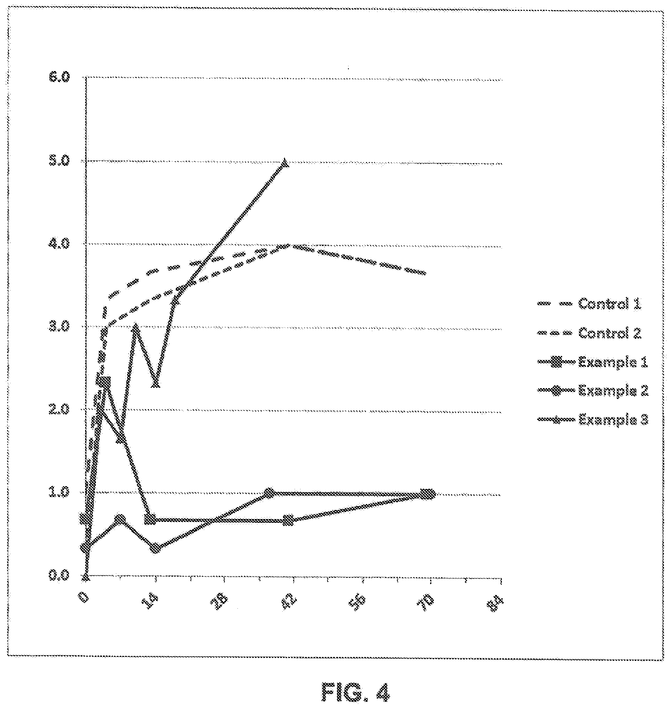

Turning now to FIG. 4, the looseness of the package overwrap was monitored over 10 weeks and their performance is illustrated in FIG. 4 as a function of looseness ranking over a number of days. It is seen that over a period of 10 weeks (70 days) control 1 and 2 with PVDC as the barrier layer shows a looseness ranking number of 3.7. This is indicative that the package looseness is between slightly loose to pretty loose. In comparison example 1 and example 2 are non-PVDC containing films based on EVOH barrier layer. Example 1 and 2 shows a looseness ranking of 1. This is indicative that the package is in fact pretty tight even at the 10^{th} week of testing. In contrast, Example 3, which lacks a barrier layer, shows poor resistance to package looseness with time. The package reached a looseness ranking of 5 during the 6^{th} week indicating the package was "loose". Hence Example 3 was eliminated from further looseness testing after 6 weeks. These results illustrates that the presence of the barrier layer and the type of the barrier layer is essential to determine the looseness resistance performance of a film which is indicative of the aroma and flavor barrier performance of the film.

The above two tests clearly illustrate that the non-PVDC films based on EVOH as the barrier layer shows improved pucker resistance and looseness resistance which is indicative of their better flavor and aroma barrier performance as described later.

While the foregoing discussion illustrates the importance of a barrier layer for acceptable pucker and looseness resistance for flavor and aroma integrity, it is also important to maintain an acceptable machinability of the film. An acrylic coating on top of the barrier layer may provide excellent slip behavior and machinability properties to the film. To better understand the importance of top-coating the barrier layer with an acrylic coating to enhance the fit-for-use ("FFU") properties, such as slip and machinability behavior, the following structures in Table 6 were compared.

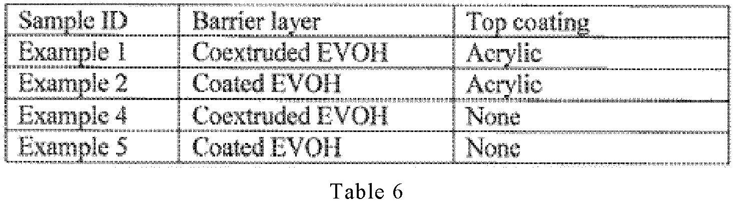

Example 1 (invention) is Structure 3, as previously described, and on one side has a coextruded EVOH skin as a barrier layer and is top-coated with acrylic coating, and the other side has an acrylic coating. Example 2 (comparative) is Structure 5, as previously described, and on one side has a coated EVOH barrier layer and is top-coated with an acrylic coating, and the other side has an acrylic coating. Example 4 (comparative) is similar to Structure 3, as previously described, and on one side has a coextruded EVOH skin as a barrier layer without an acrylic top-coating on the barrier layer, and the other side has an acrylic coating. Example 5 (comparative) is Structure 5, as previously described, and on one side has a coated EVOH barrier layer without the acrylic top-coating on the barrier layer, and the other side has an acrylic coating.

Of these structures, Example 4's coextruded barrier layer without the acrylic top-coating had a kinetic COF of 0.247. By comparison, the acrylic top-coated, coextruded barrier layer of Example 1 had an improved lower average kinetic COF of 0.175. Similarly, Example 5's coated barrier layer without the acrylic top-coating had a kinetic COF of 0.268. By comparison, the acrylic top-coated, coated barrier layer of Example 2 had an improved lower average kinetic COF of 0.194. A similar trend is also observed for static COF.

In another instance, the Handle-O Meter test, which provides the stiffness of a film, was performed on all four examples listed in Table 7. The Handle-O-Meter test combines the effect of surface friction and flexibility of a film to provide quantitative data on the stiffness of the film. Example 4's coextruded barrier layer without the acrylic top had a machine direction ("MD") stiffness of 7.25 g/10.16 cm (7.25 g/4") and a transverse direction ("TD") stiffness of 12.1 g/10.16 cm (12.1 g/4"). By comparison, Example 1's acrylic top-coated coextruded barrier layer had a lower MD stiffness of 5.95 g/10.16 cm (5.95 g/4") and a TD stiffness of 9.4 g/10.16 cm (9.4 g/4"). Since both of these compared films are of similar base film type, then the lower stiffness value may be said to be mainly indicative of lower surface friction. Similarly, Example 5's coated barrier layer without the acrylic top-coating has a MD stiffness of 7.4 g/10.16 cm (7.4 g/4") and a TD stiffness of 10.5 g/10.16 cm (10.5 g/4"). By comparison, the acrylic top-coated, coated barrier layer of Example 2 has a lower MD stiffness of 5.0 g/10.16 cm (5.0 g/4") and a TD stiffness of 7.1 g/10.16 cm (7.1 g/4"). Since both the films compared are of similar base film type, the lower stiffness value is mainly indicative of lower surface friction.

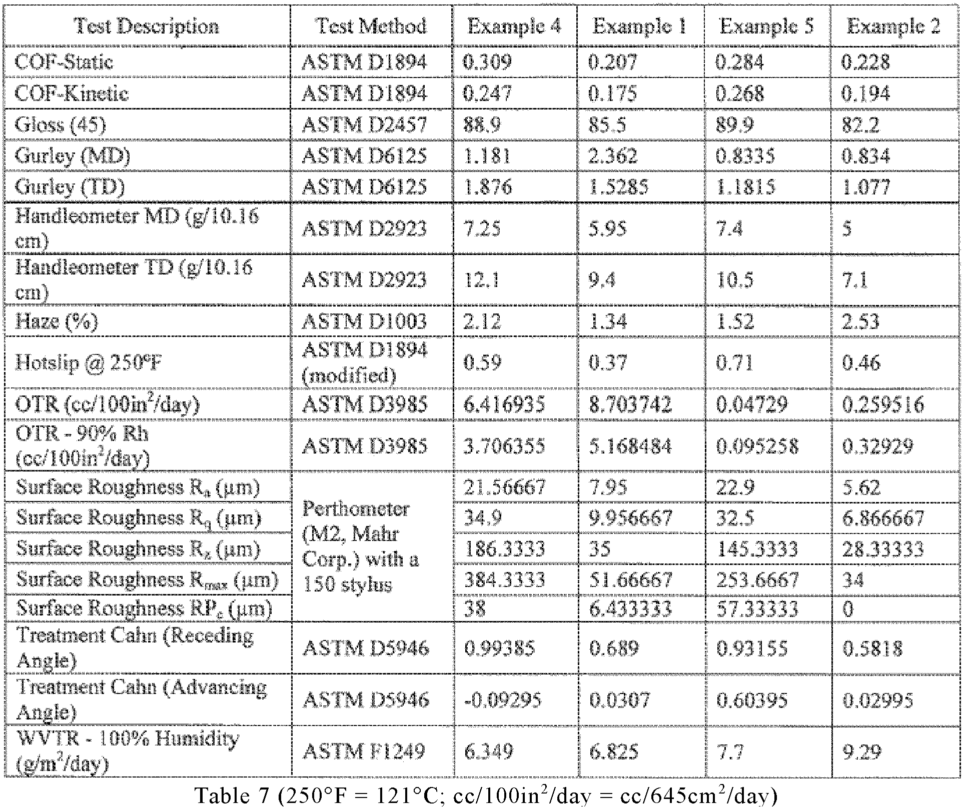

The presence of the acrylic top-coating on the barrier layer also may provide better surface characteristics at elevated temperatures. The hot-slip characteristic of a film is indicative of its coefficient of friction or slip properties at higher temperature. This test is similar to coefficient of friction performed at a higher specified temperature. Hot-slip is a unitless number, which represents the resistance to sliding of two surfaces in contact with each other at a higher specified temperature. These values are between 0 and 1. Higher values indicate more resistance to sliding. The hot-slip test is based on a modified ASTM D 1894 that uses a 6.1 Instrumentor's Slip/Peel Tester Model #SP 102B with heated platen assembly #SPA 06. The hot-slip properties of the films listed in Table 7 were measured to better understand the slip behavior at the higher temperature of 121 °C (250°F). Example 4's coextruded barrier layer without the acrylic top-coating had a hot-slip value of 0.59. By comparison, the acrylic top-coated coextruded barrier layer of Example 1 has an improved lower average hot-slip value of 0.37. Similarly, Example 5's coated barrier layer without the acrylic top-coating had a hot-slip value of 0.71. By comparison, the acrylic top-coated, coated barrier layer of Example 2 had an improved lower average hot-slip value of 0.46.

The presence of the acrylic top-coating over the barrier layer may provide better FFU properties due to enhanced surface characteristics. The surface roughness, Ra, properties of the films listed in Table 7 were measured using a M2 Perthometer from Mahr Corporation, equipped with an ISO stylus to better understand the surface roughness of the barrier side of the film. In one instance, Example 4's coextruded barrier layer without the acrylic top-coating had Rₐ of 21.56. By comparison, the acrylic top-coated, coextruded barrier layer Example 1 had an improved lower Rₐ of 7.95. Similarly, Example 5's coated barrier layer without the acrylic top-coating has Ra of 22.9. By comparison, the acrylic top-coated, coated barrier layer of Example 2 had Rₐ of 5.62.

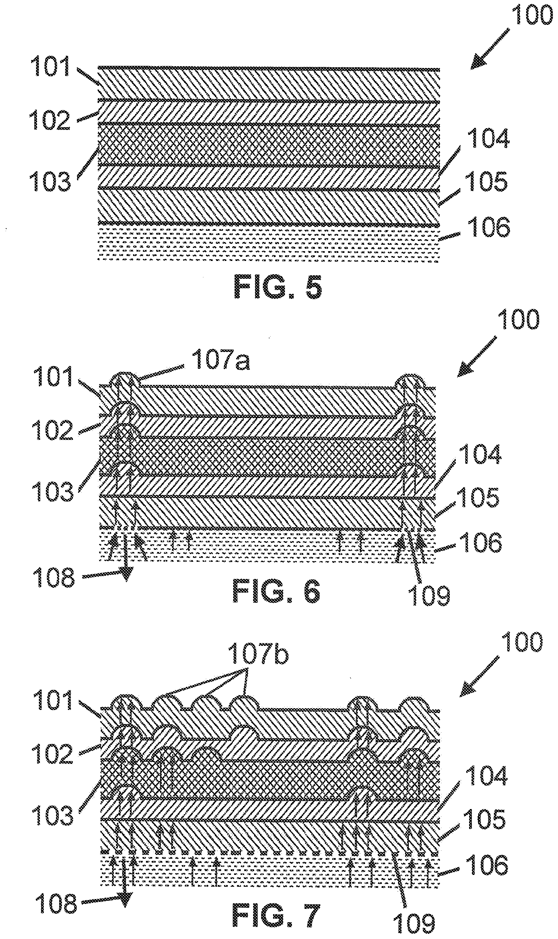

Based on the above studies, the discussion below illustrates the mechanism of the puckering phenomenon. Turning now to FIG. 5, a film or structure 100 is illustrated that may be used, for instance, in packaging of a flavored product such as gum. The structure comprises a BOPP core layer 103 surrounded by primer layers 102, 104 on each side. The top-coating 101 faces out towards the environment, while the flavor barrier 105 top-coat faces inward against the confection packaging 106.

Turning now to FIGS. 6-7, a visual defect, i.e., pucker structure, in the above-depicted film or structure 100 is illustrated by FIG. 6. The coating morphology defect 107a seen here results in a region of low-flavor barrier 109, e.g., poor sealability causing oxygen and water vapor transfer 108 into the product packaging 106 (and from there, the product).

FIG. 7 illustrates a further visual defect, i.e., film looseness, in the above-depicted film or structure 100. The coating morphology defect seen here at 107b results in further region(s) of low-flavor barrier 109, e.g., poor sealability, which allow further contamination 108 of the product packaging and product 106.

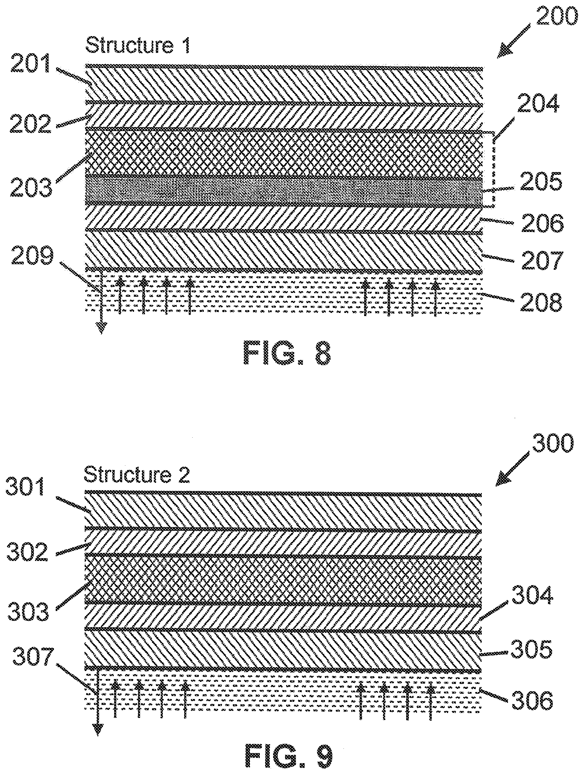

Turning now to FIGS. 8-9, films 200 and 300, disclosed herein as structures 1 and 2, respectively, are depicted imparting barriers for films, structure, packaging, and packaging applications made therefrom, with excellent machinability, visual shelf-life appearance, and sealability of flavor, oxygen, and aromas. Both films comprise a polypropylene core layer 203, 303.

Structure 1 features a barrier layer 205 co-extruded with the polypropylene core 203 to form a two-layer core 204. Surrounding this core 204 is primer layers 202, 206, as well as coating layers 201, 207. The action of the barrier is shown as 209 sealing the product 208.

Structure 2 features primer layers 302, 304 surrounding core 303. Structure 2 additionally comprises top-coat 301 and flavor barrier top-coat 305 providing the sealing action 307 for product 308.

## Claims

1. A multilayer film comprising:
a biaxially oriented core layer comprising polypropylene and having a first surface and a second surface;
a barrier layer comprising ethylene-vinyl-alcohol, polyvinyl-alcohol, polyamide, or
combinations thereof, wherein the barrier layer is adjacent to the first surface of the core layer;
a first acrylic polymer layer adjacent to the second surface of the core layer, and
a second acrylic polymer layer adjacent to the barrier layer;
wherein the barrier layer is co-extruded with the core layer.

2. The multilayer film of claim 1, further comprising a first primer layer between the core layer and the first acrylic polymer layer and a second primer layer between the barrier layer and the second acrylic polymer layer, the first primer layer and the second primer layer each comprising polyethyleneimine.

3. The multilayer film of claim 1, wherein the total thickness of the core layer and the barrier layer is between 8 µm and 100 µm.

4. The multilayer film of claim 1, wherein the thickness of the barrier layer is between 0.2 µm and 10 µm.

5. The multilayer film of claim 1, wherein the first acrylic polymer layer and/or the second acrylic polymer layer further comprises an anti-slip agent, an anti-block agent, a crosslinking agent, a stabilizing agent, or a defoamer, or combinations thereof.

6. The multilayer film of claim 1, wherein the acrylic polymer layer comprises a dry coating weight between 0.04 g/m² and 8 g/m².

7. The multilayer film of claim 1, wherein the multilayer film has:
a) a water vapor transmission rate of less than 10 g /m²/ 24 hours at 100% relative humidity, as measured pursuant to ASTM F 1249; and/or
b) an oxygen transmission rate of less than 154 g/ m² / 24 hours (10 g /100 in² / 24 hours) at 100% relative humidity, as measured pursuant to ASTM D 3985.

8. The multilayer film of claim 1, wherein the multilayer film is a sealable packaging.

## Patentansprüche

1. Mehrschichtige Folie, umfassend:
eine biaxial orientierte Kernschicht, die Polypropylen umfasst und eine erste und eine zweite Oberfläche aufweist;
eine Sperrschicht, die Ethylen-Vinyl-Alkohol, PolyvinylAlkohol, Polyamid oder Kombinationen davon umfasst, wobei die Sperrschicht an die erste Oberfläche der Kernschicht angrenzt;
eine erste Acrylpolymerschicht, die an die zweite Oberfläche der Kernschicht angrenzt, und eine zweite Acrylpolymerschicht, die an die Sperrschicht angrenzt;
wobei die Sperrschicht mit der Kernschicht koextrudiert wird.

2. Mehrschichtige Folie nach Anspruch 1, die ferner eine erste Grundierungsschicht zwischen der Kernschicht und der ersten Acrylpolymerschicht und eine zweite Grundierungsschicht zwischen der Sperrschicht und der zweiten Acrylpolymerschicht umfasst, wobei die erste Grundierungsschicht und die zweite Grundierungsschicht jeweils Polyethylenimin enthalten.

3. Mehrschichtige Folie nach Anspruch 1, wobei die Gesamtdicke der Kernschicht und der Sperrschicht zwischen 8 µm und 100 µm liegt.

4. Mehrschichtige Folie nach Anspruch 1, wobei die Dicke der Sperrschicht zwischen 0,2 µm und 10 µm liegt.

5. Mehrschichtige Folie nach Anspruch 1, wobei die erste Acrylpolymerschicht und/oder die zweite Acrylpolymerschicht außerdem ein Antirutschmittel, ein Antiblockiermittel, ein Vernetzungsmittel, ein Stabilisierungsmittel oder einen Entschäumer oder Kombinationen davon enthält.

6. Mehrschichtige Folie nach Anspruch 1, wobei die Acrylpolymerschicht ein Trockenbeschichtungsgewicht zwischen 0,04 g/m² und 8 g/m² aufweist.

7. Mehrschichtige Folie nach Anspruch 1, wobei die mehrschichtige Folie aufweist:
a) eine Wasserdampfdurchlässigkeit von weniger als 10 g/m²/24 Stunden bei 100 % relativer Luftfeuchtigkeit, gemessen nach ASTM F 1249, und/oder
b) eine Sauerstoffdurchlässigkeit von weniger als 154 g/m²/24 Stunden (10 g/100 in²/24 Stunden) bei 100 % relativer Luftfeuchtigkeit, gemessen nach ASTM D 3985.

8. Mehrschichtige Folie nach Anspruch 1, wobei die mehrschichtige Folie eine siegelbare Verpackung ist.

## Revendications

1. Film multicouche comprenant :
une couche noyau orientée de manière biaxiale comprenant un polypropylène et possédant une première surface et une deuxième surface ;
une couche barrière comprenant un éthylènealcool vinylique, un poly(alcool vinylique), un polyamide ou des combinaisons correspondantes, la couche barrière étant adjacente à la première surface de la couche noyau ;
une première couche de polymère acrylique adjacente à la deuxième surface de la couche noyau, et
une deuxième couche de polymère acrylique adjacente à la couche barrière ;
la couche barrière étant coextrudée avec la couche noyau.

2. Film multicouche selon la revendication 1, comprenant en outre une première couche d'apprêt entre la couche noyau et la première couche de polymère acrylique et une deuxième couche d'apprêt entre la couche barrière et la deuxième couche de polymère acrylique, la première couche d'apprêt et la deuxième couche d'apprêt comprenant chacune une polyéthylèneimine.

3. Film multicouche selon la revendication 1, l'épaisseur totale de la couche noyau et de la couche barrière étant comprise entre 8 µm et 100 µm.

4. Film multicouche selon la revendication 1, l'épaisseur de la couche barrière étant comprise entre 0,2 µm et 10 µm.

5. Film multicouche selon la revendication 1, la première couche de polymère acrylique et/ou la deuxième couche de polymère acrylique comprenant en outre un agent antiglissant, un agent antiblocage, un agent de réticulation, un agent stabilisant ou un antimousse, ou des combinaisons correspondantes.

6. Film multicouche selon la revendication 1, la couche de polymère acrylique comprenant un poids de revêtement à sec compris entre 0,04 g/m² et 8 g/m2.

7. Film multicouche selon la revendication 1, le film multicouche possédant :
a) une vitesse de transmission de vapeur d'eau inférieure à 10 g/m²/24 heures à 100 % d'humidité relative, telle que mesurée conformément à la norme ASTM F 1249 ; et/ou
b) une vitesse de transmission d'oxygène inférieure à 154 g/m²/24 heures (10 g/100 in²/24 heures) à 100 % d'humidité relative, telle que mesurée conformément à la norme ASTM D 3985.

8. Film multicouche selon la revendication 1, le film multicouche étant un emballage pouvant être scellé.
